# EUROPÄISCHE PATENTANMELDUNG

(11) **EP 4 585 395 A1**
(43) Veröffentlichungstag der Anmeldung: **16.07.2025**
(21) Anmeldenummer: 25150772.9
(22) Anmeldetag: 08.01.2025
(51) Int. Cl.: B29C 49/78, B29C 49/06, B29C 49/64, B29C 49/02, B29K 67/00, B29L 31/00

(54) **VORRICHTUNG UND VERFAHREN ZUM HERSTELLEN VON KUNSTSTOFFVORFORMLINGEN MIT TEMPERATURMESSUNG DER HERGESTELLTEN KUNSTSTOFFVORFORMLINGE**

(30) Priorität: 15.01.2024 DE 102024101053
(71) Anmelder: Krones AG, 93073 Neutraubling (DE)
(72) Erfinder: Forsthoevel, Jochen, 93073 Neutraubling (DE); Urban, Ralf, 93073 Neutraubling (DE); Tilsner, Christian, 65239 Hochheim/Main (DE)
(74) Vertreter: Bittner, Bernhard

(57) **Zusammenfassung**

Vorrichtung (101) zum Herstellen von Kunststoffbehältnissen (20) mit einer Herstellungseinrichtung (102) zum Herstellen von Kunststoffvorformlingen, wobei die Herstellungseinrichtung (102 eine Vielzahl von Herstellungseinheiten (103) aufweist, welche jeweils dazu geeignet und bestimmt sind, Kunststoffvorformlinge (10) aus einer Kunststoffmasse herzustellen, mit einer Umformungseinrichtung (110), wobei die Umformungseinrichtung (110) eine Vielzahl von Umformungsstationen (112) aufweist, wobei die Vorrichtung (101) wenigstens eine Transporteinrichtung (104, 105, 130) aufweist, welche dazu geeignet und bestimmt ist, die Kunststoffvorformlinge (10) wenigstens abschnittsweise vereinzelt von der Herstellungseinrichtung (102) zu der Umformungseinrichtung (110) zu transportieren, wobei die Vorrichtung (101) weiterhin eine erste Temperaturerfassungseinrichtung (120, 121) aufweist, welche dazu geeignet und bestimmt ist, eine Temperatur einzelner von der Herstellungseinrichtung (102) hergestellter Kunststoffvorformlinge (10) zu erfassen, dadurch gekennzeichnet, dass die Vorrichtung weiterhin wenigstens eine Zuordnungseinrichtung (114) aufweist, welche dazu geeignet und bestimmt ist, einem Kunststoffvorformling (10), dessen Temperatur erfasst wurde, diejenige Herstellungseinheit (103) welche diesen Kunststoffvorformling hergestellt hat und/oder diejenige Umformungsstation (112), welche diesen Kunststoffvorformling (10) zu einem Kunststoffbehältnis (20) umformen wird, zuzuordnen.

## Beschreibung

Die vorliegende Erfindung bezieht sich auf eine Vorrichtung und ein Verfahren zum Herstellen von Kunststoffbehältnissen und insbesondere Kunststoffflaschen. Derartige Vorrichtungen und Verfahren sind aus dem Stand der Technik seit langem bekannt. Dabei ist es bekannt, dass Kunststoffvorformlinge zunächst erwärmt und anschließend in Einrichtungen wie etwa Blasformenmaschinen zu Kunststoffbehältnissen umgeformt werden.

Zwischenzeitlich sind Maschinen bekannt geworden, bei denen die Produktionsanlage auch noch eine Herstellungseinrichtung, wie etwa eine Spritzgießmaschine aufweist, welche diese Kunststoffvorformlinge herstellt. Dabei ist man bestrebt, die von der Herstellungseinrichtung hergestellten und daher warmen Kunststoffvorformlinge direkt weiter zu verarbeiten, um so Energie für die Erwärmung der Kunststoffvorformlinge einzusparen.

Aus der DE 10 2016 118 670 A1 ist ein Verfahren und eine Vorrichtung zur Prüfung von Preforms bekannt. Dabei werden Preforms bzw. Kunststoffvorformlinge transportiert und Wärmebilder von diesen Preforms aufgenommen.

Aus der WO 2018/036857 A1 ist ein optisches Inspektionssystem für Kunststoffvorformlinge bekannt.

Der vorliegenden Erfindung liegt die Aufgabe zugrunde, eine Steuerung derartiger Vorrichtungen verbessern. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Herstellen von Kunststoffbehältnissen weist eine Herstellungseinrichtung zum Herstellen von Kunststoffvorformlingen auf, wobei diese Kunststoffvorformlinge dazu geeignet und bestimmt sind, zu Kunststoffbehältnissen umgeformt zu werden. Weiterhin weist die Herstellungseinrichtung eine Vielzahl von Herstellungseinheiten auf, welche jeweils dazu geeignet und bestimmt sind, Kunststoffvorformlinge aus einer Kunststoffmasse bzw. aus einem (insbesondere in einem fließfähigen Zustand vorliegenden) Kunststoff herzustellen.

Bevorzugt ist dabei jede dieser Herstellungseinheiten geeignet, genau einen einzelnen Kunststoffvorformling herzustellen. Damit handelt es sich bei der Herstellungseinheit bevorzugt um ein Formwerkzeug, welches dazu geeignet und bestimmt ist, einen einzelnen Kunststoffvorformling herzustellen. Bei der Herstellungseinrichtung handelt es sich insbesondere um eine Spritzgießmaschine.

Weiterhin weist die Vorrichtung eine Umformungseinrichtung auf, welche dazu geeignet und bestimmt ist, die von der Herstellungseinrichtung hergestellten Kunststoffvorformlinge zu den Kunststoffbehältnissen umzuformen, wobei die Umformungseinrichtung eine Vielzahl von Umformungsstationen aufweist, welche jeweils dazu geeignet und bestimmt sind, die Kunststoffvorformlinge mit einem fließfähigen Medium und insbesondere einem gasförmigen Medium und insbesondere mit Druckluft zu beaufschlagen, um diese zu den Kunststoffbehältnissen umzuformen.

Weiterhin weist die Vorrichtung wenigstens eine Transporteinrichtung auf, welche dazu geeignet und bestimmt ist, die Kunststoffvorformlinge wenigstens abschnittsweise vereinzelt von der Herstellungseinrichtung zu der Umformungseinrichtung zu transportieren, wobei die Vorrichtung weiterhin eine erste Inspektionseinrichtung und/oder Temperaturerfassungseinrichtung aufweist, welche dazu geeignet und bestimmt ist, eine Temperatur einzelner von der Herstellungseinrichtung hergestellter Kunststoffvorformlinge (insbesondere ortsaufgelöst) zu erfassen.

Bevorzugt ist die Temperaturerfassungseinrichtung bzw. Inspektionseinrichtung dazu geeignet und bestimmt, die Temperatur eines ersten Bereiches der Kunststoffvorformlinge ortsaufgelöst zu erfassen

Erfindungsgemäß weist die Vorrichtung weiterhin wenigstens eine Zuordnungseinrichtung auf, welche dazu geeignet und bestimmt ist, einem Kunststoffvorformling, dessen Temperatur erfasst wurde, diejenige Herstellungseinheit, welche diesen Kunststoffverformung hergestellt hat und/oder diejenige Umformungsstation, welche diesen Kunststoffvorformling zu einem Kunststoffbehältnissen umformen wird, zuzuordnen.

So kann beispielsweise ein Bild mehrerer Kunststoffvorformlinge aufgenommen werden und die in diesem Bild abgebildeten Kunststoffvorformlinge können den einzelnen Herstellungseinheiten oder Umformungsstationen zugeordnet werden. Auch wäre es denkbar, dass jeweils Bilder einzelner Kunststoffvorformlinge zugeordnet werden und diese Kunststoffvorformlinge dann den Herstellungseinheiten und/oder Umformungsstationen zugeordnet werden.

Bevorzugt weist die Vorrichtung eine Speichereinrichtung auf, in welcher wenigstens zeitweise die von der Bildaufnahmeeinrichtung aufgenommenen Bilder abgespeichert werden.

Es wird daher vorgeschlagen, die Temperatur der Kunststoffvorformlinge zu erfassen und insbesondere unter Verwendung dieser Temperatur die Herstellungseinrichtung und/oder die Umformungseinrichtung zu steuern und insbesondere Parameter, welche für die Herstellung und/oder die Umformung charakteristisch sind, zu steuern.

Dies ermöglicht eine dynamische Regelung von Parametern der Umformungseinrichtung und/oder der Herstellungseinrichtung. Bei den Parametern der Umformungseinrichtung kann es sich beispielsweise um den Vor-, Zwischen- oder Fertigblasdruck, den zeitlichen Verlauf des Druckprofils um eine Temperatur/ en, und/ oder ein Temperaturprofil/ Verteilung um eine Reckstangenbewegung, oder eine Kühlung in einem Erwärmungsmodul und dergleichen handeln.

Bei den Parametern der Herstellungseinrichtung kann es sich beispielsweise um eine Nachdruckzeit, einen Einspritzdruck, einen Einspritzstrom, ein Spritzprofil, eine Einspritztemperatur, ein Umschaltvolumen, eine Einspritzgeschwindigkeit, eine Massetemperatur, eine Temperatur der Form, eine Schneckendrehzahl, einen Staudruck oder einen Umschaltpunkt, ein e Temperierung der Nachkühleinheit oder dergleichen handeln.

Generell kann durch die gezielte Nutzung von Restwärme aus dem Spritzgussvorgang der Energieverbrauch im Heizmodul der Streckblasmaschine reduziert werden. Zudem wird ein größeres Prozessfenster und damit stabileres Betriebsverhalten erreicht, da Schwankungen ausgeregelt werden können. Dies kann weitere Möglichkeiten in Bezug auf das Lightweighting von Behältnissen aus Kunststoff, welche im Streckblasprozess hergestellt werden, eröffnen.

Bei einer bevorzugten Ausführungsform handelt es sich bei der Umformungseinrichtung um eine Blasformmaschine und insbesondere um eine Streckblasmaschine. Bevorzugt weist die Umformungseinrichtung einen bewegbaren und insbesondere einen drehbaren Träger auf, an dem die Umformungsstationen angeordnet sind.

Bevorzugt weisen die Umformungsstationen jeweils stangenartige Körper, insb. sogenannte Reckstangen auf, welche in die Kunststoffvorformlinge einführbar sind, um diese in deren Längsrichtung zu dehnen. Weiterhin weisen bevorzugt die Umformungsstationen jeweils Ventilblöcke auf, welche eine Beaufschlagung der Kunststoffvorformlinge mit einem fließfähigen Medium und insbesondere mit Druckluft und insbesondere mit unterschiedlichen Drücken ermöglichen.

Besonders bevorzugt ist die Temperaturerfassungseinrichtung entlang des Transportpfades angeordnet, entlang dessen die Kunststoffvorformlinge von der Herstellungseinrichtung zu der Umformungseinrichtung transportiert werden. Bevorzugt ist daher die (erste) Temperaturerfassung zwischen der Herstellungseinrichtung und der Umformungseinrichtung angeordnet. Besonders bevorzugt ist die Transporteinrichtung dazu geeignet und bestimmt, die Temperatur der Kunststoffvorformlinge und/oder wenigstens einen Wert, der für die Temperatur der Kunststoffvorformlinge charakteristisch ist, zu erfassen und insbesondere während einer Bewegung der Kunststoffvorformlinge zu erfassen.

Weiterhin weist die Vorrichtung bevorzugt eine Temperiereinrichtung zum Temperieren der hergestellten Kunststoffvorformlinge und insbesondere eine Kühleinrichtung zum Kühlen der hergestellten Kunststoffvorformlinge auf. Bevorzugt ist diese Kühleinrichtung dazu geeignet und bestimmt, eine vorgegebene Anzahl von Kunststoffvorformlingen zeitgleich zu kühlen.

Bei einer bevorzugten Ausführungsform weist Herstellungseinrichtung wenigstens 20, bevorzugt wenigstens 30, bevorzugten wenigstens 40, bevorzugt wenigstens 50, bevorzugt wenigstens 80 und bevorzugt wenigstens 100 Herstellungseinheiten auf. Bevorzugt weist die Herstellungseinrichtung höchstens 200, bevorzugt höchstens 180 und bevorzugt höchstens 160 Herstellungseinheiten auf.

Diese Herstellungseinheiten können dabei an einem gemeinsamen Träger angeordnet sein. Bevorzugt sind diese Herstellungseinheiten in gleicherweise ausgerichtet, so dass die in ihnen hergestellten Kunststoffvorformling bevorzugt ebenfalls gleich ausgerichtet sind und/oder parallel zueinander ausgerichtet sind.

Bei einer weiteren vorteilhaften Ausführungsform weist die Umformungseinrichtung wenigstens 4, bevorzugt wenigstens 8, bevorzugt wenigstens 10 und bevorzugt wenigstens 20 Umformungsstationen auf. Bei einer weiteren bevorzugten Ausführungsform weist die Umformungseinrichtung höchstens 100, bevorzugt höchstens 80 und besonders bevorzugt höchstens 60 Umformungsstationen auf.

Bei einer weiteren vorteilhaften Ausführungsform weist die erste Temperaturerfassungseinrichtung wenigstens eine Bildaufnahmeeinrichtung, insbesondere eine Kamera und insbesondere eine Wärmebildkamera auf. Besonders bevorzugt weist die erste Temperaturerfassungseinrichtung eine Vielzahl von ersten Wärmebildkameras auf. Bevorzugt sind diese Bildaufnahmeeinrichtungen und insbesondere Wärmebildkameras entlang einer Linie angeordnet, welche schräg oder insbesondere senkrecht zu einem Transportpfad der Kunststoffvorformlinge verläuft.

Bei einer weiteren vorteilhaften Ausführungsform weist die Vorrichtung eine zweite Temperaturerfassungseinrichtung auf, welche dazu geeignet und bestimmt ist, die Temperatur eines zweiten Bereichs der Kunststoffvorformlinge zu erfassen, wobei sich der erste Bereich der Kunststoffvorformlinge und der zweite Bereich der Kunststoffvorformlinge voneinander unterscheiden.

Bei einer weiteren vorteilhaften Ausführungsform weist die Vorrichtung eine Inspektionseinrichtung auf, welche dazu geeignet und bestimmt ist, wenigstens einen Kennwert, der für den Kunststoffvorformling charakteristisch ist und/oder insbesondere einen Kennwert, der für einen zweiten Bereich des Kunststoffvorformlings charakteristisch ist zu erfassen.

Bevorzugt ist dieser Kennwert aus einer Gruppe von Kennwerten ausgewählt, welche eine Geometrie des Kunststoffvorformlings, eine Farbe des Kunststoffvorformlings, eine Feuchte des Kunststoffvorformlings, der intrinsischen Viskosität (IV-Wert des Kunststoffvorformlings) eine Temperatur des Kunststoffvorformlings, eines Spannungsbildes und dergleichen enthält.

Besonders bevorzugt, handelt es sich bei dem ersten Bereich der Kunststoffvorformlinge um einen Mündungsbereich der Kunststoffvorformlinge. Besonders bevorzugt handelt es sich bei dem zweiten Bereich der Kunststoffvorformlinge um einen Grundkörper der Kunststoffvorformlinge und dabei bevorzugt um demjenigen Bereich, der von der Umformungseinrichtung umgeformt wird. Der besagte Mündungsbereich wird bevorzugt von der Umformungseinrichtung nicht umgeformt.

Bei einer weiteren vorteilhaften Ausführungsform weist die Vorrichtung eine zwischen der Herstellungseinrichtung und der Umformungseinrichtung angeordnete Erwärmungseinrichtung auf, welche dazu geeignet und bestimmt ist, die von der Herstellungseinrichtung hergestellten Kunststoffvorformlinge insbesondere wenigstens abschnittsweise zu erwärmen.

Bevorzugt weist diese Erwärmungseinrichtung eine Transporteinrichtung zum Transportieren der Kunststoffvorformlinge sowie wenigstens eine Heizeinrichtung zum Erwärmen der Kunststoffvorformlinge auf.

Bevorzugt ist die Transporteinrichtung als umlaufende Transportkette ausgebildet, an der eine Vielzahl von Halteeinrichtungen und insbesondere Haltedornen zum Halten der Kunststoffvorformlinge angeordnet ist. Bevorzugt weist diese Erwärmungseinrichtung auch eine Dreheinrichtung auf, welche die Kunststoffvorformlinge während ihrer Erwärmung bezüglich ihrer Längsachse dreht.

Bevorzugt handelt es sich bei den Heizeinrichtungen um Infrarot Heizeinrichtungen, welche die Kunststoffvorformlinge mit Infrarotstrahlung der aufschlagen, um sie zu erwärmen. Es wäre jedoch auch denkbar, dass es sich bei der Erwärmungseinrichtung um eine Mikrowellenerwärmungseinrichtung handelt, welche die Kunststoffvorformlinge mittels Mikrowellen erwärmt.

Bei einer weiteren vorteilhaften Ausführungsform weist die Vorrichtung eine weitere zweite Inspektionseinrichtung und/oder Temperaturerfassungseinrichtung auf, welche dazu geeignet und bestimmt ist, eine Temperatur der zwischen der Herstellungseinrichtung und der Umformungseinrichtung und/oder der von der Erwärmungseinrichtung erwärmten Kunststoffvorformlinge zu erfassen, wobei diese weitere Temperaturerfassungseinrichtung bevorzugt dazu geeignet und bestimmt ist, die Temperatur der Kunststoffvorformlinge zumindest in der Längsrichtung dieser Kunststoffvorformlinge ortsaufgelöst zu erfassen.

Insbesondere ist diese weitere Temperaturerfassungseinrichtung dazu geeignet und bestimmt, die Temperatur einzelner Kunststoffvorformlinge zu erfassen.

Diese weitere Temperaturerfassungseinrichtung kann dabei als eine Vielzahl von Pyrometern ausgebildet sein, welche in der Längsrichtung der Kunststoffvorformlinge übereinander angeordnet sind. Besonders bevorzugt ist jedoch diese weitere Temperaturerfassungseinrichtung ebenfalls als Bildaufnahmeeinrichtung und insbesondere als Wärmebildkamera ausgebildet, welche ein Bild bzw. ein Wärmebild der Kunststoffvorformlinge aufnimmt und/oder hierzu geeignet und bestimmt ist.

Bei einer weiteren vorteilhaften Ausführungsform weist die Vorrichtung eine weitere Zuordnungseinrichtung auf, um den transportierten und/oder von der Erwärmungseinrichtung erwärmten Kunststoffvorformlingen Umformungsstationen zuzuordnen, insbesondere diejenigen Umformungsstation, welche diese Kunststoffvorformlinge erwärmen werden. Daneben kann auch diese Zuordnungseinrichtung den von der weiteren Temperaturerfassungseinrichtung erfassten Kunststoffvorformlinge Herstellungseinheiten zuordnen.

Bei einer weiteren bevorzugten Ausführungsform weist die Transporteinrichtung, welche die Kunststoffvorformlinge von der Herstellungseinrichtung zu der Umformungseinrichtung bzw. in Richtung der Umformungseinrichtung transportiert, einen beweglichen Träger auf, der eine Vielzahl von Aufnahmemitteln zum Aufnehmen der Kunststoffvorformlinge in gleicher Ausrichtung aufweist.

So kann diese Transporteinrichtung beispielsweise ein Tray aufweisen, welches eine Vielzahl von Ausnehmungen aufweist, welche jeweils zur Aufnahme einzelner Kunststoffvorformlinge geeignet und bestimmt sind.

Besonders bevorzugt weist die Transporteinrichtung wenigstens zwei unterschiedliche Transportmittel zum Transportieren der Kunststoffvorformlinge auf. Bevorzugt ist dabei wenigstens eines dieser Transportmittel aus einer Gruppe von Transportmitteln ausgewählt, welche Transportsterne, Transportketten, Transportbänder und dergleichen enthält.

Bevorzugt weist wenigstens eines dieser Transportmittel Greifeinrichtungen zum Greifen der Kunststoffvorformlinge auf. Bei diesen Greifeinrichtungen kann es sich beispielsweise um Greifklammern oder Haltedorne handeln.

Bevorzugt ist wenigstens eine Temperaturerfassungseinrichtung und sind bevorzugt beide Temperaturerfassungseinrichtungen an einem Transportpfad dieses Trägers angeordnet und ermöglichen bevorzugt eine vereinzelte Temperaturerfassung der einzelnen Kunststoffvorformlinge.

Bei einer weiteren vorteilhaften Ausführungsform ist die wenigstens eine Transporteinrichtung dazu geeignet und bestimmt, die Kunststoffvorformlinge durchgehend vereinzelt von der Herstellungseinrichtung zur Umformungseinrichtung zu transportieren. Dies bedeutet, dass insbesondere auf dem Transportpfad zwischen der Herstellungseinrichtung und der Umformungseinrichtung stets eine Zuordnung jedes transportierten Kunststoffvorformlings zu derjenigen Herstellungseinheit, welche diesen Kunststoffvorformling hergestellt hat und/oder derjenigen Umformungsstation, welche diesen Kunststoffvorformling zu einem Kunststoffbehältnis umformen wird, möglich ist.

Auf diese Weise kann eine Zuordnung bestimmter Kunststoffvorformlinge zu den Herstellungseinheiten und/oder den Umformungsstationen aufrechterhalten werden. So kann eine Steuerung sowohl der Herstellungseinrichtung und/oder der Umformungseinrichtung unter Berücksichtigung der individuell erfassten Temperaturen der einzelnen Kunststoffvorformlinge erreicht werden. Es wäre dabei möglich, dass die Temperatur jedes einzelnen transportierten Kunststoffvorformlings erfasst wird, es wäre jedoch auch möglich, dass beispielsweise lediglich die Temperatur jedes n-ten Kunststoffvorformlings erfasst wird.

Bei einer weiteren vorteilhaften Ausführungsform weisen die Herstellungseinheiten jeweils Markierungseinrichtungen auf, welche dazu geeignet und bestimmt sind, die hergestellten Kunststoffvorformlinge oder herzustellenden Kunststoffvorformlinge mit einer Markierung zu versehen, welche wenigstens für diejenige Herstellungseinheit charakteristisch ist, welche den betreffenden Kunststoffvorformling hergestellt hat. So können beispielsweise an den Tragringen dieser Kunststoffvorformling derartige Markierungen angebracht werden. Dies kann insbesondere während des Herstellungsprozesses der Kunststoffvorformlinge erfolgen.

Bei einer weiteren vorteilhaften Ausführungsform weist die Vorrichtung wenigstens eine Inspektionseinrichtung auf, welche dazu geeignet ist, wenigstens einen für die Kunststoffvorformlinge charakteristischen Kennwert zu bestimmen wobei bevorzugt auch dieser Kennwert derjenigen Herstellungseinheit, welche diesen Kunststoffvorformling hergestellt hat und/oder derjenigen Umformungsstation, welche diesen Kunststoffvorformling zu einem Kunststoffbehältnis umformen wird, zuordenbar ist.

Die vorliegende Erfindung ist weiterhin auf ein Verfahren zum Herstellen von Kunststoffbehältnissen gerichtet, wobei eine Herstellungseinrichtung Kunststoffvorformlinge herstellt, wobei diese Kunststoffvorformlinge dazu geeignet und bestimmt sind, zu Kunststoffbehältnissen umgeformt zu werden. Weiterhin weist die Herstellungseinrichtung eine Vielzahl von Herstellungseinheiten auf, welche jeweils die Kunststoffvorformlinge aus einer Kunststoffmasse (und/oder aus einem während der Herstellung fließfähigen Kunststoff) herstellen.

Bevorzugt handelt es sich bei dem Kunststoff um PET.

Weiterhin formt eine Umformungseinrichtung die von der Herstellungseinrichtung hergestellten Kunststoffvorformlinge zu den Kunststoffbehältnissen und insbesondere Kunststoffflaschen um, wobei die Umformungseinrichtung eine Vielzahl von Umformungsstationen aufweist, welche jeweils die Kunststoffvorformlinge mit einem fließfähigen Medium (und insbesondere gasförmigen) beaufschlagen, um sie so zu den Kunststoffbehältnissen umzuformen.

Weiterhin transportiert wenigstens eine Transporteinrichtung die Kunststoffvorformlinge wenigstens abschnittsweise vereinzelt von der Herstellungseinrichtung zur Umformungseinrichtung. Weiterhin ist eine erste Temperaturerfassungseinrichtung vorgesehen, welche eine Temperatur einzelner von der Herstellungseinrichtung hergestellter Kunststoffvorformlinge (und/oder für eine derartige Temperatur charakteristische Werte) erfasst.

Bevorzugt erfasst die erste Temperaturerfassungseinrichtung die Temperatur eines ersten Bereichs der Kunststoffvorformlinge (insbesondere ortsaufgelöst und insbesondere zumindest in einer Längsrichtung der Kunststoffvorformling ortsaufgelöst).

Erfindungsgemäß ist weiterhin wenigstens eine Zuordnungseinrichtung vorgesehen, welche einem Kunststoffvorformling, dessen Temperatur von der ersten Temperaturerfassungseinrichtung erfasst wurde, diejenige Herstellungseinheit, welche diesen Kunststoff Vorformen hergestellt hat und oder die Umformungsstationen, wegen diesen Kunststoffvorformling zu einem Kunststoffbehältnissen umformen, wird zugeordnet. Es ist dabei möglich, dass eine (mittlere) Temperatur jedes Kunststoffvorformlings oder eines Bereichs jedes Kunststoffvorformlings erfasst wird, es wäre jedoch auch möglich, dass die Temperatur auch innerhalb dieses Bereichs (wie etwa eines Mündungsbereichs oder eines Grundkörpers) ortsaufgelöst erfasst wird.

Besonders bevorzugt erfasst eine zweite Temperaturerfassungseinrichtung eine Temperatur eines zweiten Bereichs der Kunststoffvorformlinge. Bevorzugt erfasst wenigstens eine Temperaturerfassungseinrichtung und erfassen bevorzugt beide Temperaturerfassungseinrichtungen die Temperatur des ersten und/oder zweiten Bereichs der Kunststoffvorformlinge während einer Transportbewegung der Kunststoffvorformlinge.

Besonders bevorzugt erwärmt eine weitere Erwärmungseinrichtung die hergestellten Kunststoffvorformlinge, bevor diese zu der Umformungseinrichtung gelangen.

Weitere Vorteile und Ausführungsformen ergeben sich aus den beigefügten Zeichnungen:

Darin zeigen:
- Fig. 1: eine grob schematische Darstellung einer erfindungsgemäßen Vorrichtung;
- Fig. 2: eine Darstellung einer Herstellungseinrichtung zum Herstellen von Kunststoffvorformlinge in einer ersten Ansicht; und
- Fig. 3: eine weitere Ansicht der in Fig 2 gezeigten Herstellungseinrichtung.

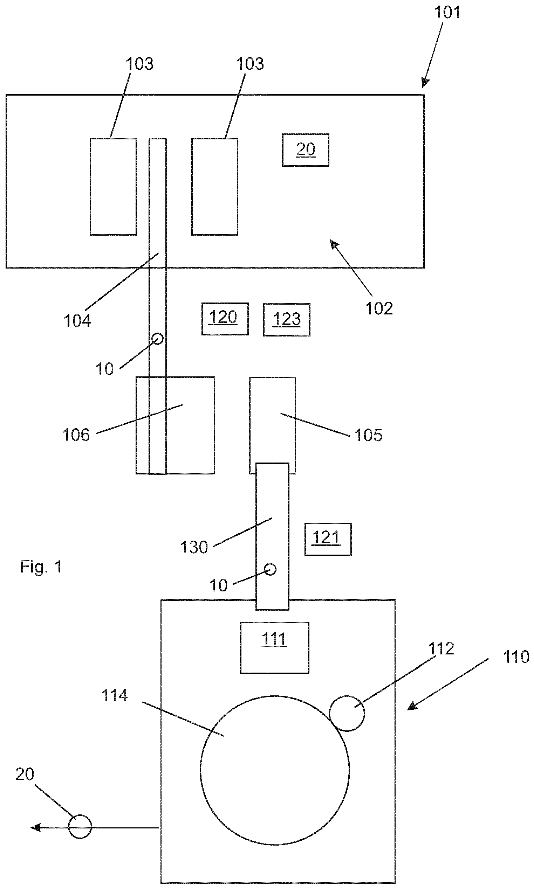

Fig. 1 zeigt eine grob schematische Darstellung einer Vorrichtung 101 zum Herstellen von Kunststoffbehältnissen. Diese Vorrichtung 101 weist eine Herstellungseinrichtung 102 auf, welche Kunststoffvorformlinge 10 herstellt. Bevorzugt handelt es sich bei dieser Herstellungseinrichtung 102 um eine Spritzgießmaschine. Diese Herstellungseinrichtung 102 weist dabei eine Vielzahl von Herstellungseinheiten und insbesondere Formwerkzeugen auf, welche jeweils dazu geeignet und bestimmt sind, einzelne Kunststoffvorformlinge 10 herzustellen.

Das Bezugszeichen 104 kennzeichnet schematisch eine Entnahmeeinrichtung, welche die spritzgegossenen Kunststoffvorformlinge 10 aus den Herstellungseinheiten 102 entnimmt.

Das Bezugszeichen 106 kennzeichnet eine Kühleinrichtung, insbesondere in Form einer Nachkühleinheit, welche die hergestellten Kunststoffvorformlinge 10 temperiert und insbesondere kühlt. Bevorzugt werden die Kunststoffvorformlinge direkt nach deren Herstellung in dieser Kühleinrichtung 106 eingelegt und/oder der Kühleinrichtung zugeführt.

Entlang des Transportpfads der Transporteinrichtung 104 ist eine Inspektionseinrichtung und insbesondere eine erste Temperaturerfassungseinrichtung 120 angeordnet, welche eine Temperatur der Kunststoffvorformlinge oder einen hierfür charakteristischen Wert erfasst und insbesondere berührungslos erfasst. Dabei ist diese erste Temperaturerfassungseinrichtung 120 insbesondere dazu geeignet und bestimmt die Temperatur jedes einzelnen Kunststoffvorformlings 10 zu erfassen. Neben oder anstelle der Temperaturerfassungseinrichtung kann an dieser Stelle auch eine Inspektionseinrichtung vorgesehen sein, welche wenigstens einen für den Kunststoffvorformling charakteristischen Wert erfasst. Das Bezugszeichen 123 kennzeichnet eine Auswerteeinrichtung zum, Auswerten der von der Temperaturerfassungseinrichtung gemessenen Werte.

Das Bezugszeichen 130 kennzeichnet eine Zuordnungseinrichtung, welche jedem Kunststoffvorformling 10, dessen Temperatur erfasst wurde eine Herstellungseinheit 103, welche diesen Kunststoffvorformling hergestellt hat, zuordnet. Die Herstellungseinrichtung 101 weist bevorzugt wenigstens eine Steuerungseinrichtung auf, welche dazu geeignet und bestimmt die ist, die einzelnen Herstellungseinheiten auch in Abhängigkeit von den gemessenen Temperaturen der einzelnen Kunststoffvorformlinge zu steuern.

Das Bezugszeichen 105 kennzeichnet eine Transporteinrichtung und insbesondere eine Handlingseinheit, welche die Kunststoffvorformlinge 10 von der Transporteinrichtung 104 übernimmt.

Zusätzlich oder alternativ ist die Zuordnungseinrichtung 130 auf in der Lage, jedem Kunststoffvorformling diejenige Umformungsstation 112 zuzuordnen, welche diesem Kunststoffvorformling zu einem Kunststoffbehältnis umformen wird.

Bevorzugt ist daher die erste Temperaturerfassungseinrichtung zwischen der Herstellungseinrichtung und/oder den einzelnen Herstellungseinheiten und der Kühleinrichtung 106 und/oder der Transporteinrichtung 105 angeordnet.

Das Bezugszeichen 121 kennzeichnet eine weitere Inspektionseinrichtung, welche wenigstens einen Wert erfasst, welcher für den jeweils inspizierten Kunststoffvorformling charakteristisch ist. Auch hier kann es sich bevorzugt wieder um einen Wert handeln, der aus einer Gruppe von Werten ausgewählt ist, welche eine Geometrie der Kunststoffvorformlinge, eine Farbe der Kunststoffvorformlinge, eine Feuchte der Kunststoffvorformlinge, einen IV-Wert der Kunststoffvorformling, eine Temperatur der Kunststoffvorformling oder dergleichen enthält.

Bevorzugt werden diese Werte einer übergeordneten Steuerung zur Verfügung gestellt, um Parameter der gesamten Vorrichtung zu steuern.

Es kann weiterhin eine Ausleiteinrichtung vorgesehen sein, welche (insbesondere abhängig von den erwähnten Kennwerten) bewirkt, dass einzelne Kunststoffvorformlinge nicht an die Umformungseinrichtung 112 übergeben werden.

Weiterhin kann eine (nicht gezeigte) Lückschließeinrichtung vorgesehen sein, welche durch die Ausleitung einzelner Kunststoffvorformlinge entstehende Lücken wieder schließt.

Das Bezugszeichen 110 kennzeichnet in der Gesamtheit eine Umformungseinrichtung, welche die Kunststoffvorformlinge zu Kunststoffbehältnissen 20 umformt.

Dabei ist bevorzugt zunächst eine Erwärmungseinrichtung vorgesehen, welche die Kunststoffvorformlinge auf eine Temperatur erwärmt, die für eine Umformung und insbesondere eine Expansion zu den Kunststoffbehältnissen 20 geeignet ist.

Die Umformungseinrichtung 110 weist bevorzugt einen drehbaren Träger 114 auf, an dem eine Vielzahl von Umformungsstationen 112 angeordnet ist. Diese Umformungsstationen sind bevorzugt unabhängig voneinander steuerbar. Das Bezugszeichen 111 kennzeichnet eine Erwärmungseinrichtung zum Erwärmen der Kunststoffvorformlinge.

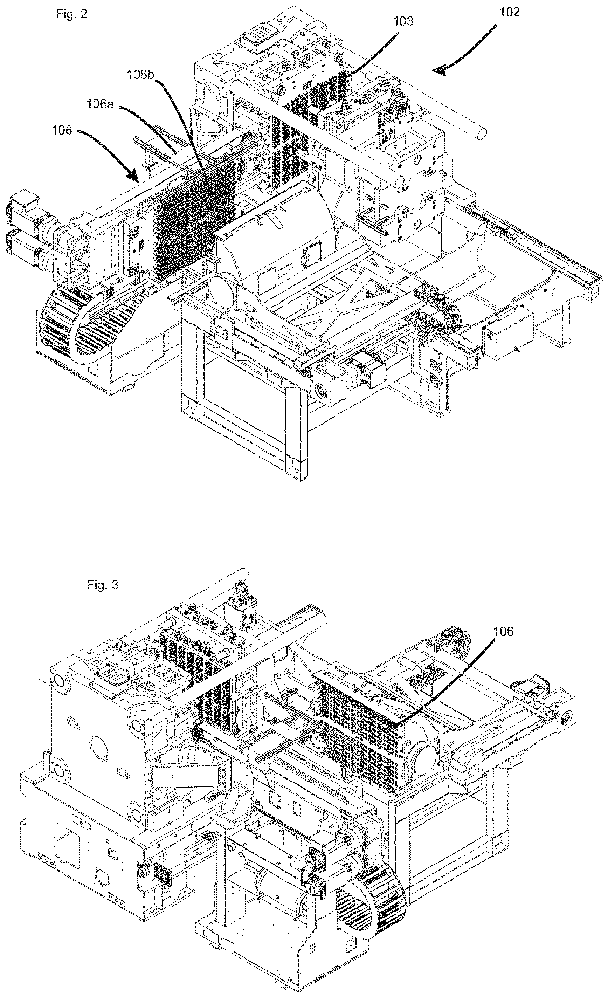

Fig. 2 und Fig. 3 zeigen eine erste Ansicht einer Herstellungseinrichtung 102 zum Herstellen der Kunststoffvorformlinge. Dabei kennzeichnet das Bezugszeichen 103 eine Vielzahl von Herstellungseinheiten, welche jeweils einzelne Kunststoffvorformlinge herstellen.

Das Bezugszeichen 106 kennzeichnet eine Kühleinrichtung zum Kühlen der Kunststoffvorformlinge. Das Bezugszeichen 106a kennzeichnet einen Lichtschrank. Diesem gegenüber ist eine Abnahmeeinrichtung zum Abnehmen der Kunststoffvorformlinge nach dem Herstellungsprozess. Das Bezugszeichen 106b kennzeichnet einzelne Aufnahmeeinrichtungen zum Aufnehmen der Kunststoffvorformlinge.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (101) zum Herstellen von Kunststoffbehältnissen (20) mit einer Herstellungseinrichtung (102) zum Herstellen von Kunststoffvorformlingen, wobei diese Kunststoffvorformlinge (10) dazu geeignet und bestimmt sind, zu Kunststoffbehältnissen (20) geformt zu werden, wobei die Herstellungseinrichtung (102) eine Vielzahl von Herstellungseinheiten (103) aufweist, welche jeweils dazu geeignet und bestimmt sind, Kunststoffvorformlinge (10) aus einer Kunststoffmasse herzustellen, mit einer Umformungseinrichtung (110), welche dazu geeignet und bestimmt ist, die von der Herstellungseinrichtung (102) hergestellten Kunststoffvorformlinge (10) zu den Kunststoffbehältnissen (20) umzuformen, wobei die Umformungseinrichtung (110) eine Vielzahl von Umformungsstationen (112) aufweist, welche jeweils dazu geeignet und bestimmt sind, die Kunststoffvorformlinge (10) mit einem fließfähigen Medium zu beaufschlagen, um diese zu den Kunststoffbehältnissen (20) umzuformen, wobei die Vorrichtung (101) wenigstens eine Transporteinrichtung (104, 105, 130) aufweist, welche dazu geeignet und bestimmt ist, die Kunststoffvorformlinge (10) wenigstens abschnittsweise vereinzelt von der Herstellungseinrichtung (102) zu der Umformungseinrichtung (110) zu transportieren, wobei die Vorrichtung (101) weiterhin eine erste Temperaturerfassungseinrichtung (120, 121) aufweist, welche dazu geeignet und bestimmt ist, eine Temperatur einzelner von der Herstellungseinrichtung (102) hergestellter Kunststoffvorformlinge (10) zu erfassen,
**dadurch gekennzeichnet, dass**
die Vorrichtung weiterhin wenigstens eine Zuordnungseinrichtung (114) aufweist, welche dazu geeignet und bestimmt ist, einem Kunststoffvorformling (10), dessen Temperatur erfasst wurde, diejenige Herstellungseinheit (103) welche diesen Kunststoffvorformling hergestellt hat und/oder diejenige Umformungsstation (112), welche diesen Kunststoffvorformling (10) zu einem Kunststoffbehältnis (20) umformen wird, zuzuordnen.

2. Vorrichtung (101) nach Anspruch 1,
**dadurch gekennzeichnet, dass**
die Temperaturerfassungseinrichtung (120, 121) entlang des Transportpfads angeordnet ist, entlang dessen die Kunststoffvorformlinge von der Herstellungseinrichtung (102) zu der Umformungseinrichtung (110) transportiert werden.

3. Vorrichtung (101) nach wenigstens einem der vorangegangenen Ansprüche,
**dadurch gekennzeichnet, dass**
die Vorrichtung (101) eine Kühleinrichtung (106) zum Kühlen der hergestellten Kunststoffvorformlinge aufweist.

4. Vorrichtung (101) nach wenigstens einem der vorangegangenen Ansprüche,
**dadurch gekennzeichnet, dass**
die Herstellungseinrichtung (102) wenigstens 20, bevorzugt wenigstens 30, bevorzugt wenigstens 40, bevorzugt wenigstens 50, bevorzugt wenigstens 80 und bevorzugt wenigstens 100 Herstellungseinheiten (103) aufweist und/oder die Umformungseinrichtung wenigstens 4, bevorzugt wenigstens 8, bevorzugt wenigstens 10 und bevorzugt wenigstens 20 Umformungsstationen (112) aufweist.

5. Vorrichtung (101) nach wenigstens einem der vorangegangenen Ansprüche,
**dadurch gekennzeichnet, dass**
die erste Temperaturerfassungseinrichtung (120, 121) wenigstens eine Kamera und insbesondere eine Wärmebildkamera aufweist und besonders bevorzugt die erste Temperaturerfassungseinrichtung eine Vielzahl von ersten Wärmebildkameras aufweist.

6. Vorrichtung (101) nach wenigstens einem der vorangegangenen Ansprüche,
**dadurch gekennzeichnet, dass**
die Vorrichtung (101) eine zweite Temperaturerfassungseinrichtung (121) und/oder eine zweite Inspektionseinrichtung aufweist, welche dazu geeignet und bestimmt ist, die Temperatur oder einen Kennwert wenigstens eines zweiten Bereichs der Kunststoffvorformenlinge (10) zu erfassen, wobei sich der erste Bereich der Kunststoffvorformlinge und der zweite Bereich der Kunststoffvorformlinge voneinander unterscheiden.

7. Vorrichtung (101) nach wenigstens einem der vorangegangenen Ansprüche,
**dadurch gekennzeichnet, dass**
die Transporteinrichtung (104, 105, 130), welche die Kunststoffvorformlinge von der Herstellungseinrichtung (102) zu der Umformungseinrichtung (110) transportiert, einen beweglichen Träger aufweist, der eine Vielzahl von Aufnahmemitteln zum Aufnehmen der Kunststoffvorformlinge in gleicher Ausrichtung aufweist.

8. Vorrichtung (101) nach wenigstens einem der vorangegangenen Ansprüche,
**dadurch gekennzeichnet, dass**
die wenigstens eine Transporteinrichtung (104, 106, 130) dazu geeignet und bestimmt ist, die Kunststoffvorformlinge durchgehend vereinzelt von der Herstellungseinrichtung (102) zu der Umformungseinrichtung (110) zu transportieren.

9. Vorrichtung (101) nach wenigstens einem der vorangegangenen Ansprüche,
**dadurch gekennzeichnet, dass**
die Herstellungseinheiten (103) jeweils Markierungseinrichtungen aufweisen, welche dazu geeignet und bestimmt sind, die hergestellten Kunststoffvorformlinge mit einer Markierung zu versehen, welche wenigstens für diejenige Herstellungseinheit (103) charakteristisch ist, welche den betreffenden Kunststoffvorformling (10) hergestellt hat.

10. Vorrichtung (101) nach wenigstens einem der vorangegangenen Ansprüche,
**dadurch gekennzeichnet, dass**
die Vorrichtung wenigstens eine Inspektionseinrichtung aufweist, welche dazu geeignet ist, wenigstens einen für die Kunststoffvorformlinge charakteristischen Kennwert zu bestimmen wobei bevorzugt auch dieser Kennwert derjenigen Herstellungseinheit, welche diesen Kunststoffvorformling hergestellt hat und/oder derjenigen Umformungsstation, welche diesen Kunststoffvorformling zu einem Kunststoffbehältnis umformen wird, zuordenbar ist.

11. Verfahren zum Herstellen von Kunststoffbehältnissen, wobei eine Herstellungseinrichtung (102) Kunststoffvorformlinge (10) herstellt, wobei diese Kunststoffvorformlinge (10) dazu geeignet und bestimmt sind, zu Kunststoffbehältnissen (20) umgeformt zu werden, wobei die Herstellungseinrichtung (102) eine Vielzahl von Herstellungseinheiten (103) aufweist, welche jeweils die Kunststoffvorformlinge aus einer Kunststoffmasse herstellen und eine Umformungseinrichtung (110), welche die von der Herstellungseinrichtung (102) hergestellten Kunststoffvorformlinge (10) zu den Kunststoffbehältnissen (20) und insbesondere Kunststoffflaschen umformt, wobei die Umformungseinrichtung (110) eine Vielzahl von Umformungsstationen (112) aufweist, welche jeweils die Kunststoffvorformlinge (10) mit einem fließfähigen Medium beaufschlagen, um sie so zu den Kunststoffbehältnissen (20) umzuformen und wobei weiterhin wenigstens eine Transporteinrichtung (104, 105, 130) die Kunststoffvorformlinge (10) wenigstens abschnittsweise vereinzelt von der Herstellungseinrichtung (102) zu der Umformungseinrichtung (110) transportiert und wenigstens eine erste Temperaturerfassungseinrichtung (120, 121) vorgesehen ist, welche eine Temperatur einzelner von der Herstellungseinrichtung (102) hergestellter Kunststoffvorformlinge und/oder für eine derartige Temperatur charakteristische Werte erfasst,
**dadurch gekennzeichnet, dass**
die erste Temperaturerfassungseinrichtung die Temperatur eines ersten Bereichs der Kunststoffvorformlinge erfasst und weiterhin wenigstens eine Zuordnungseinrichtung wenigstens einem Kunststoffvorformling, dessen Temperatur von der ersten Temperaturerfassungseinrichtung (121) erfasst wurde, diejenige Herstellungseinheit (103), welche diesen Kunststoffvorformling (10) hergestellt hat und/oder diejenige Umformungsstation (112), wegen diesen Kunststoffvorformling (10) zu einem Kunststoffbehältnis (20) umformen wird, zuordnet.

12. Verfahren nach dem vorangegangenen Anspruch,
**dadurch gekennzeichnet, dass**
eine zweite Temperaturerfassungseinrichtung (121) die Temperatur eines zweiten Bereichs der Kunststoffvorformlinge (10) erfasst.

13. Verfahren nach wenigstens einem der vorangegangenen Ansprüche,
**dadurch gekennzeichnet, dass**
wenigstens eine Temperaturerfassungseinrichtung und bevorzugt beide Temperaturerfassungseinrichtungen die Temperatur des ersten und/oder zweiten Bereichs der Kunststoffvorformlinge während einer Transportbewegung der Kunststoffvorformlinge erfasst und/oder erfassen.

14. Verfahren nach wenigstens einem der vorangegangenen Ansprüche,
**dadurch gekennzeichnet, dass**
eine weitere Erwärmungseinrichtung die hergestellten Kunststoffvorformlinge erwärmt, bevor diese zu der Umformungseinrichtung (110) gelangen.
